# EUROPEAN PATENT APPLICATION

(11) **EP 2 963 478 A1**
(43) Date of publication of application: **06.01.2016**
(21) Application number: 14756475.1
(22) Date of filing: 14.02.2014
(51) Int. Cl.: G02B 27/01, B60K 37/00

(54) **HEADUP DISPLAY DEVICE**

(30) Priority: 28.02.2013 JP 2013038641
(71) Applicant: Nippon Seiki Co., Ltd., Nagaoka-shi, Niigata 940-8580 (JP)
(72) Inventor: KASAHARA,Tsuyoshi, Nagaoka Niigata (JP); YAMAZOE,Takashi, Nagaoka Niigata (JP)
(74) Representative: Carpmaels & Ransford LLP
(86) International application number: PCT/JP2014/053492
(87) International publication number: WO 2014/132817

(57) **Abstract**

Provided is a headup display device capable of projecting a virtual image onto a curved surface. A headup display device (100) comprises: a display means (5) for emitting display light (L) representing an image; a pair of parallel flat mirrors (40) comprising a parallel arrangement of a flat semi-transparent mirror (41) and a flat mirror (42), said flat semi-transparent mirror (41) receiving the display light (L) emitted from the display means (5) and reflecting a part of the display light (L) while transmitting the other part of the display light, and said flat mirror (42) reflecting the display light (L) toward the flat semi-transparent mirror (41); and a curved mirror (50) for projecting an image represented by the display light (L) onto a curved surface as a virtual image by reflecting the display light (L) transmitted through the flat semi-transparent mirror (41) onto the curved surface. The curved mirror (50) has a curved surface shape such that when display light (L) transmitted through the flat semi-transparent mirror (41) and parallel to a first plane is reflected by the curved mirror (50) and the curved surface in that order, the reflected display light (L) becomes display light (L) representing a virtual image parallel to a second plane.

## Description

### TECHNICAL FIELD

The present invention relates to a headup display device.

### BACKGROUND ART

A headup display disclosed in Patent Literature 1 is known as a conventional headup display. The headup display comprises a display device, a collimator lens, and a pair of parallel flat mirrors. One of the flat mirrors is a semi-transparent mirror that reflects a part of incident light and transmits a part thereof. The light transmitted from a display device (display light) enters a collimator lens to become a parallel light, and enters a pair of parallel flat mirrors. The parallel light entered into the pair of parallel flat mirrors repeats reflection between the flat mirrors. As one of the parallel flat mirrors is a semi-transparent mirror, a part of the parallel light entered into the semi-transparent mirror is emitted from the semi-transparent mirror. The parallel light emitted from the semi-transparent mirror is reflected by a flat transparent plate (so-called a combiner), and the parallel light reaches an eye of an observer. As the parallel light enters the eye of the observer, the observer recognizes as if a display image is present in a distant place by viewing a virtual image projected onto the combiner.

### CITATION LIST

### PATENT LITERATURE

Patent Literature 1: International Publication No. 2010-092409

### SUMMARY OF THE INVENTION

### PROBLEMS TO BE SOLVED BY THE INVENTION

In the headup display disclosed in Patent Literature 1, as the headup display emits a parallel light, it is impossible to project a virtual image onto a curved surface. In other words, when a virtual image is projected onto a curved surface, a nonparallel light enters an eye of an observer, and an observer does not recognize that a display image is present in a distant place.

The present invention has been made in view of the circumstance described above. Accordingly, it is an object of the present invention to provide a headup display device capable of projecting a virtual image onto a curved surface.

### SOLUTION TO PROBLEM

To achieve the above object, a headup display device according to the present invention has the following characteristics, which emits a display light to a curved surface, and projects an image represented by the display light as a virtual image by reflecting the display light on the curved surface, comprising: a display means that emits a display light representing the image; a pair of parallel flat mirrors, into which a display light emitted by the display means is entered, and in which a flat semi-transparent mirror for reflecting a part of the display light and transmitting a part thereof is arranged parallel to a flat mirror for reflecting the display light onto the flat semi-transparent mirror; and a curved mirror that projects an image represented by the display light onto the curved surface as the virtual image by reflecting the display light transmitted through the flat semi-transparent mirror onto the curved surface, wherein the curved mirror has a curved surface shape that when a display light parallel to a first plane, of the display light transmitted through the flat semi-transparent mirror, is reflected by the curved mirror and the curved surface in this order, the reflected display light becomes a display light representing the virtual image parallel to a second plane.

### EFFECT OF THE INVENTION

According to the present invention, it is possible to project a virtual image onto a curved surface in a headup display device.

### BRIEF DESCRIPTION OF THE DRAWINGS

Fig. 1 is a schematic diagram showing an outline of a headup display device according to an embodiment of the present invention.
Fig. 2 is a schematic sectional view showing a configuration of a headup display device according to an embodiment of the present invention.
Fig. 3 is a schematic sectional view showing a configuration of a headup display device according to an embodiment of the present invention.
Fig. 4 is a schematic diagram showing an optical path of display light in a pair of parallel flat mirrors according to an embodiment of the present invention.
Fig. 5 is a schematic diagram for explaining an optical simulation according to an embodiment of the present invention.
Fig. 6 is a schematic diagram for explaining an optical simulation according to an embodiment of the present invention.
Fig. 7 is a configuration diagram showing a configuration of a control unit according to an embodiment of the present invention.

### MODE FOR CARRYING OUT THE INVENTION

### (Embodiment)

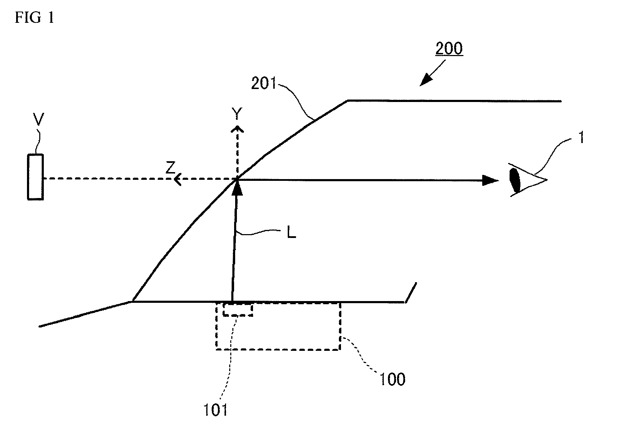

An embodiment of the present invention will be described with reference to Fig. 1 to Fig. 7.

Fig. 1 shows an outline of a headup display device according to an embodiment of the present invention. Here, a lateral direction of a vehicle 200 (a lateral direction of an eye 1 of an observer) is defined as an X-axis, a vertical direction of a vehicle 200 (a vertical direction of an eye 1 of an observer) is defined as a Y-axis, and a viewing direction of an observer vertical to the X-axis and Y-axis is defined as a Z-axis (Fig. 1).

A headup display device 100 according to an embodiment is installed on a dashboard of a vehicle 200 as shown in Fig. 1. The headup display device 100 emits a display light L representing a virtual image V from an emitting part 101 to a windshield 201 of a vehicle 200. The display light reflects on the windshield 201, and reaches an eye 1 of an observer. The observer recognizes a virtual image V of a display image M represented by the display light L reflecting on the windshield 201 (a virtual image projected onto the windshield 201). The observer recognizes, through the windshield 201, as if the display image M is present in a distant place.

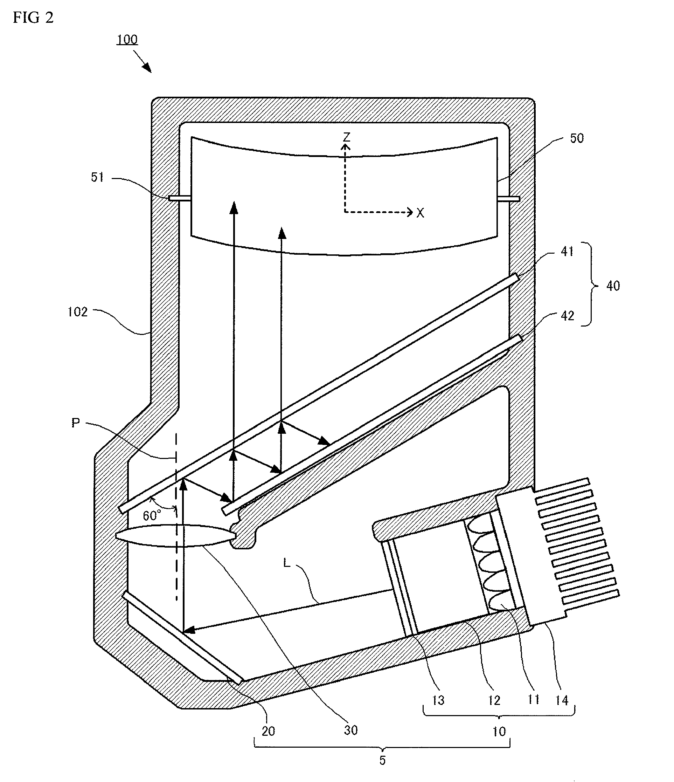

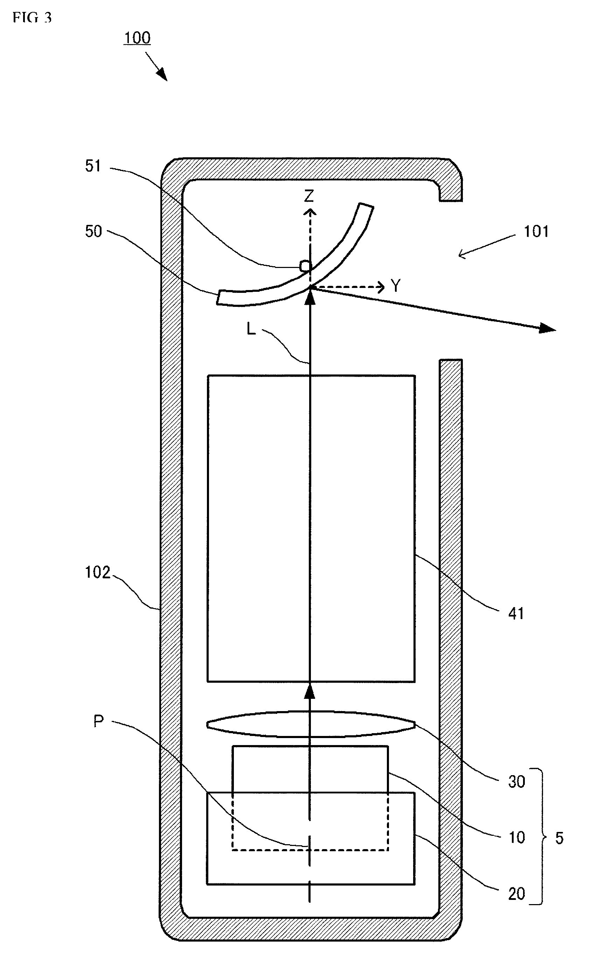

Fig. 2 schematically shows a transverse cross section of the headup display device 100 in the vehicle 200 (Fig. 1). Fig. 3 schematically shows a longitudinal section of the headup display device 100 in the vehicle 200 (Fig. 1). Here, as in Fig. 1, a lateral direction of the vehicle 200 (a lateral direction of the eye 1 of the observer) is defined as an X-axis, a vertical direction of the vehicle 200 (a vertical direction of the eye 1 of the observer) is defined as a Y-axis, and a viewing direction of the observer vertical to the X-axis and Y-axis is defined as a Z-axis (Figs. 2 and 3).

The headup display device 100 comprises, as shown in Fig. 2, a display means 5 disposed in a housing 102, a pair of parallel flat mirrors 40, and a curved mirror 50. The headup display device 100 includes a control unit 60 (not shown).

The display means 5 comprises a display device 10, a folding mirror 20, and a collimator lens 30.

The display light L emitted from the display device 10 reflects on the folding mirror 20, and enters the collimator lens 30. The display light L is collimated by the collimator lens 30. The display light L emitted from the collimator lens 30 enters the pair of parallel flat mirrors 40. One of the pair of parallel flat mirrors, into which the display light L enters, comprises a flat semi-transparent mirror 41 that reflects a part of the incident light and transmits a part thereof. The display light L entered into the pair of parallel flat mirrors 40 repeats reflection between the pair of parallel flat mirrors 40, and a part of the display light L exits from the pair of parallel flat mirrors 40 (transmitted through the flat semi-transparent mirror 41).

The display light L transmitted through the flat semi-transparent mirror 41 reflects on the curved mirror 50, and exits from the emitting part 101 (Fig. 3). The display light L emitted from the emitting part 101 enters the windshield 201. The windshield 201 reflects the incident display light L, and the reflected display light L reaches the eye 1 of the observer.

In the embodiment, the windshield 201 is a glass having a predetermined curved surface (convex to the outside of the vehicle 200) (Fig. 1). The curved mirror 50 reflects the incident display light L transmitted through the flat semi-transparent mirror 41 to the windshield 201, so that of the incident display light L transmitted through the flat semi-transparent mirror 41, the display light L parallel to a YZ plane reflects on the curved mirror 50 and the windshield 201 in this order, and becomes a display light L parallel to the YZ plane (Figs. 1 and 3). In other words, the curved mirror 50 has a curved surface shape that of the incident display light L transmitted through the flat semi-transparent mirror 41, the display light L parallel to the YZ plane reflects on the curved mirror 50 and the windshield 201 in this order, and becomes a display light L parallel to the YZ plane. The display light L reflected by the windshield 201 and parallel to the YZ plane is light that is parallel in the lateral direction of the eye 1 of the observer, and the observer recognizes through the windshield 201 as if the display image M is present in a distant place.

A specific configuration of the headup display device 100 will be described. To facilitate the understanding of the invention, a description will be limited to the light emitted from the collimator lens 30 and parallel to the YZ plane (the light parallel in the lateral direction of the eye 1 of the observer).

### (Display device, Folding mirror, Collimator lens)

In the embodiment, the display device 10 is a liquid crystal display device, and comprises a light source 11, a diffusion plate 12, a liquid crystal display panel 13, and a heat sink 14. The light source comprises a plurality of LEDs (Light Emitting Diode). The light source 11 emits light for illuminating the liquid crystal display panel 13. The diffusion plate 12 is made of a white resin such as polycarbonate. The diffusion plate 12 diffuses the light emitted from the light source, and uniformly illuminates the liquid crystal display panel.

The liquid crystal display panel 13 generates a display image M by modulating the illumination light from the diffusion plate 12 in accordance with a video signal transmitted from a control unit 60 described later. The liquid crystal display panel 13 emits a display light L representing the display image M.

The heat sink 14 is made of a metal such as aluminum, and dissipates the heat generated by the light source 11. The heat sink 14 is disposed on a surface opposite to a surface for emitting the light of the light source 11.

The folding mirror is, for example, a flat aluminum deposited mirror, and reflects the display light L emitted from the liquid crystal display panel 13 onto the collimator lens 30. The folding mirror 20 is disposed to be inclined with respect to the display surface of the liquid crystal display panel 13 to headup the display light L by folding it (Fig. 2).

The collimator lens 30 is, for example, a convex lens. The collimator lens 30 is disposed on the optical path of the display light L reflected by the folding mirror 20 (Fig. 2). The collimator lens 30 collimates the incident display light L. The collimator lens 30 has a lens optical axis P.

### (A pair of parallel flat mirrors)

A pair of parallel flat mirrors 40 comprises a flat semi-transparent mirror 41 that reflects a part of incident light and transmits a part thereof, and a flat mirror 42, which are arranged in parallel. The flat semi-transparent mirror 41 is made by coating a dielectric multilayer film on a glass, for example. The flat mirror 42 is, for example, a flat aluminum deposited mirror. A light amount ratio of transmitted light and reflected light in the flat semi-transparent mirror 41 is 1: 9 in the embodiment.

In the pair of parallel flat mirrors 40, the flat mirror 42 is disposed in the collimator lens 30 side (Fig. 2). A parallel plane of the pair of parallel flat mirrors 40 is disposed to be inclined with respect to the lens optical axis P of the collimator lens 30. In the embodiment, the parallel plane of the pair of parallel flat mirrors 40 is inclined 60° with respect to the lens optical axis P of the collimator lens 30 (Fig. 2).

The display light L emitted from the collimator lens 30 and parallel to the YZ plane enters the flat semi-transparent mirror 41. To ensure the optical path of the display light L, the outer shape of the flat mirror 42 is smaller than that of the flat semi-transparent mirror 41 (Fig. 2).

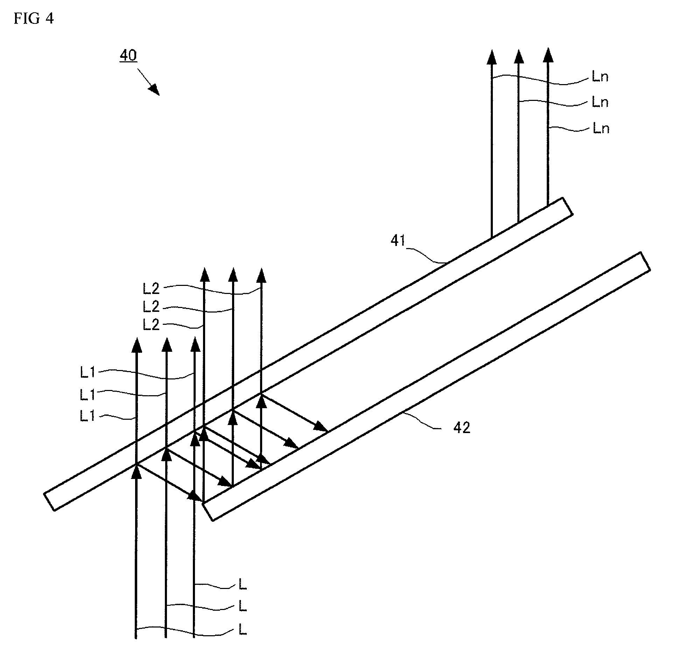

Referring to Fig. 4, a description will be given of the operation of the pair of parallel flat mirrors 40.

In the embodiment, the parallel plane of the pair of parallel flat mirrors 40 is disposed to be inclined with respect to the lens optical axis P of the collimator lens 30. Thus, the display light L incident on the pair of parallel flat mirrors 40 repeats reflection between the pair of parallel flat mirrors 40 in a state parallel to the YZ plane. The light amount ratio of transmitted light and reflected light in the flat semi-transparent mirror 41 is 1: 9. Therefore, when the display light L first enters the flat semi-transparent mirror 41, the light amount of the first exit light from the pair of parallel flat mirrors 40 (first transmitted light from the flat semi-transparent mirror 41) becomes 1/10 of the display light L entered first into the flat semi-transparent mirror 41 (hereinafter, referred to as a display light L1). The display light L1 is different from the display light L only in the light amount. Thus, as the display light L, the display light L1 represents a display image M (hereinafter, referred to as a display image M1). (However, in the embodiment, the folding mirror 20 is provided between the display device 10 and the pair of parallel flat mirrors 40, and the display image M1 becomes an image in which the left and right of the display image M are inverted.) Further, the display light L is parallel to the YZ plane, and the flat semi-transparent mirror 41 and the flat mirror 42 are arranged in parallel. Thus, the display light L1 is emitted from the pair of parallel flat mirrors 40 as light parallel to the YZ plane.

On the other hand, the display light L entered first into the flat semi-transparent mirror 41 reflects on the flat semi-transparent mirror 41 and the flat mirror 42 in this order, and enters, again (twice), the flat semi-transparent mirror 41. When the display light L enters the flat semi-transparent mirror 41 at the second time, as in the first time, the pair of parallel flat mirrors 40 emits a display light L2 representing the display image M (hereinafter, referred to as a display image M2).

As the display light L repeats reflection between the pair of parallel flat mirrors 40, when the display light L enters n times the flat semi-transparent mirror 41, the pair of parallel flat mirrors 40 emits display light L1 to Ln representing display image M1 to Mn. In other words, the pair of parallel flat mirrors 40 emits the display light L (display light L1 to Ln) representing n display images M (display image M1 to Mn) along the X-axis direction (the lateral direction of the eye 1 of the observer).

The display light L emitted from the pair of parallel flat mirrors 40 (transmitted through the flat semi-transparent mirror 41) is, as described later, reflected by the windshield 201, and the observer recognizes the virtual image V projected onto the windshield 201. The display light L emitted from the pair of parallel flat mirrors 40 represents n display images M along the lateral direction of the eye 1 of the observer, and n virtual images V are projected onto the windshield 201 along the lateral direction of the eye 1 of the observer. Therefore, the observer (for example, a driver of the vehicle 200) can recognize the virtual image V in a wide range of lateral direction. In other words, the observer can recognize, in a wide range of lateral direction, as if the display image M is present in a distant place.

### (Curved mirror)

The curved mirror 50 is, for example, an aluminum deposited mirror, and is disposed on the optical path of the display light L transmitted through the flat semi-transparent mirror 41. The curved mirror 50 reflects the display light L transmitted through the flat semi-transparent mirror 41 onto the windshield 201 via the emitting part 101. In this case, the curved mirror reflects so that the display light L entered into the YZ plane as a parallel light reflects on the curved mirror 50 and the windshield 201 in this order, and becomes a display light parallel to the YZ plane (Figs. 1 and 3). In other words, the curved mirror 50 has a curved surface shape that the display light L transmitted through the flat semi-transparent mirror 41 and parallel to the YZ plane reflects on the curved mirror 50 and the windshield 201 in this order, and becomes light parallel to the YZ plane.

The curved surface shape of the curved mirror 50 can be obtained from the curved surface shape of the windshield 201 by using a commercially available optical simulation software (for example, Synopsys Inc. CODEV, Lambda Research Corp. OSLO, etc.).

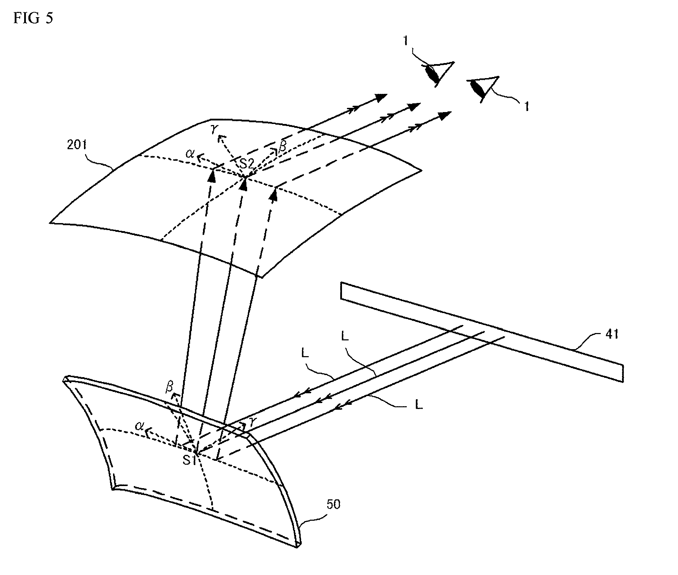

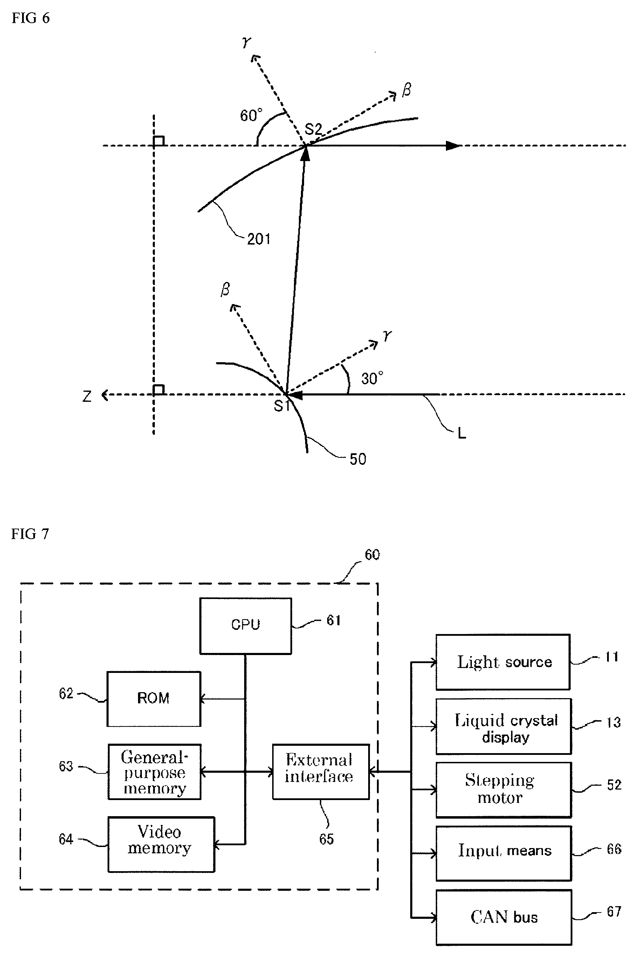

Referring to Figs. 5 and 6, a description will be given of the curved surface shape of the curved mirror 50 obtained by optical simulation.

In the optical simulation, regarding arbitrary reference points S1 and S2 as an origin, the curved mirror 50 and the windshield 201 are assumed to have a γ-axis in the direction vertical to the convex surface, an α-axis in the lateral direction of the vehicle 200, and a β-axis in the direction vertical to the α-axis and γ-axis (Figs. 5 and 6). In the optical simulation, the βγ plane (Figs. 5 and 6) corresponds to the YZ plane (Figs. 1 and 3).

The curved mirror 50 is assumed to have a convex surface toward the pair of parallel flat mirrors 40, and is arranged to have an angle of 30° between the γ-axis and the Z-axis of the curved mirror 50 (Fig. 6). Further, in the direction parallel to the Z-axis, the distance between the reference point S1 of the curved mirror 50 and the flat semi-transparent mirror 41 is set to 180 mm (Fig. 5).

The curved surface shape of the windshield 201 is concave toward the inside of the vehicle 200 (a convex surface toward the outside of the vehicle). The radius of curvature Rα in the α-axis direction (the radius of curvature about the transverse cross section of the windshield 201) is set to 3000 mm, and the radius of curvature Rβ in the β-axis direction (the radius of curvature about the longitudinal section of the windshield 201) is set to 15000 mm (Fig. 5). Further, the windshield 201 is arranged to have an angle of 60° between the γ-axis and the Z-axis of the windshield 201, and to have a distance of 250 mm between the reference point S2 of the windshield 201 and the reference point S1 of the curved mirror 50 (Fig. 6).

Further, the distance between the eye 1 of the observer and the reference point S2 of the windshield 201 is set to 50 mm (Fig. 5).

In the above conditions, a curved surface shape (curvature) is determined by optical simulation. The curved surface shape is that the light incident on the curved mirror 50 and parallel to the βγ plane reflects on the windshield 201, and the light incident on the windshield 201 reflects on the βγ plane as a parallel light.

As a result of optical simulation, as a curved surface shape of the curved mirror 50, the radius of curvature Rα in the α-axis direction (the radius of curvature about the transverse cross section of the curved mirror 50), 5000 mm, and the radius of curvature Rβ in the β-axis direction (the radius of curvature about the longitudinal section of the curved mirror 50), 10000 mm, are obtained.

As described above, it is possible to obtain the curved surface shape of the curved mirror 50 from the curved surface shape of the windshield 201 by optical simulation.

The curved mirror 50 includes a rotating part 51 that assumes the X-axis to be a rotation axis. By rotating the rotating part 51 by a stepping motor 52 (not shown), it is possible to adjust a projection position of the virtual image V in the Y-axis direction in the windshield 201 (Fig. 1).

Since the headup display device 100 includes the curved mirror 50, the display light L reflected by the curved mirror and emitted from the headup display device 100 reflects on the windshield 201, and becomes a parallel light (light parallel to the YZ plane) in the lateral direction of the eye 1 of the observer shown in Fig. 5. Therefore, the observer views the virtual image of the display image M represented by the display light L reflecting on the windshield 201 (the virtual image projected onto the windshield 201), and recognizes through the windshield 201 as if the display image M is present in a distant place.

### (Control unit)

A control unit 60, as shown in Fig. 7, controls the light source 11, the liquid crystal display panel 13, the stepping motor 52, and the like. For example, the control unit 60 controls the liquid crystal display panel 13 by sending a video signal to the liquid crystal display panel 13. The control unit 60 comprises a CPU (Central Processing Unit) 61, a ROM (Read Only Memory) 62, a general-purpose memory 63, a video memory 64, an external interface 65, and the like. The external interface 65 is connected to a CAN (Control Area Network) bus 67 for transmitting and receiving information on the vehicle 200. The external interface 65 is also connected to an input means 66 for accepting a key input for adjusting the brightness of the light source 11 and the angle of the curved mirror 50.

According to the headup display device 100 described in the above embodiment, the headup display device 100 is able to project a virtual image V onto a curved surface, and an observer is able to recognize in as if a display image M is present in a distant place a wide range of lateral direction. This is achieved by the following configuration.

A headup display device 100, which emits a display light L to a curved surface, and projects an image M represented by the display light L as a virtual image V by reflecting the display light L on the curved surface, comprising a display means 5 that emits the display light L representing the image M; a pair of parallel flat mirrors 40, into which a display light emitted by the display means 5 is entered, and in which a flat semi-transparent mirror 41 for reflecting a part of the display light L and transmitting a part thereof is arranged parallel to a flat mirror 42 for reflecting the display light L onto the flat semi-transparent mirror 41; and a curved mirror 50 that projects the image M represented by the display light L onto a curved surface as the virtual image V by reflecting the display light L transmitted through the flat semi-transparent mirror 41 onto the curved surface, wherein the curved mirror 50 has a curved surface shape that when the display light L parallel to a first plane, of the display light L transmitted through the flat semi-transparent mirror 41, is reflected by the curved mirror 50 and the curved surface in this order, the reflected display light L becomes a display light L representing a virtual image V parallel to a second plane.

The curved mirror 50 may have a curved surface shape that the display light L representing the virtual image V reflected by the curved surface becomes a display light L traveling in substantially the same direction. Further, the curved mirror 50 may have a convex surface toward the flat semi-transparent mirror 41.

The curved mirror 50 may have a curved surface shape that the display light L, which is reflected by a curved surface onto which the virtual image V is projected, becomes a parallel light.

The first plane and the second plane may be the same plane, or may be a different plane.

The display means 5 can be comprised of the display device 10 and the collimator lens 30. Further, the display means 5 may comprise the display device 10.

As the display device 10, an organic EL (Electroluminescence) display, or a projection type display or the like can be used. Further, the display device 10 may include a condensing means such as a micro lens array and the like, or a collimating means for the display light L.

The collimator lens 30 may be an optical system that combines multiple convex lenses, a convex lens and a concave lens, and the likes. Further, the collimator lens 30 may use a lenticular lens.

The curved surface onto which the virtual image V is projected is not limited to the windshield 201 of the vehicle 200. The curved surface onto which the virtual image V is projected may be a curved glass in a building, a spectacle lens, or the like.

In the above description, in order to facilitate the understanding of the present invention, a description of unimportant known technical matters is omitted as appropriate.

### INDUSTRIAL APPLICABILITY

The present invention is applicable as a headup display device, which projects an image onto a windshield or the like of a vehicle, and displays a virtual image.

### DESCRIPTION OF REFERENCE NUMERALS

- 1: Eye of observer
- 5: Display means
- 10: Display device (Liquid crystal display device)
- 11: Light source
- 12: Diffusion plate
- 13: Liquid crystal display panel
- 14: Heat sink
- 20: Folding mirror
- 30: Collimator lens
- 40: Pair of parallel flat mirrors
- 41: Flat semi-transparent mirror
- 42: Flat mirror
- 50: Curved mirror
- 51: Rotating part
- 52: Stepping motor
- 60: Control unit
- 61: CPU
- 62: ROM
- 63: General-purpose memory
- 64: Video memory
- 65: External interface
- 66: Input means
- 67: CAN bus
- 100: Headup display device
- 101: Emitting part
- 102: Housing
- 200: Vehicle
- 201: Windshield
- M: Display image (Image)
- L: Display light
- P: Optical axis of collimator lens
- V: Virtual image
- S1: Reference point
- S2: Reference point

## Claims

1. A headup display device, which emits a display light to a curved surface, and projects an image represented by the display light as a virtual image by reflecting the display light on the curved surface, comprising:
a display means that emits a display light representing the image;
a pair of parallel flat mirrors, into which a display light emitted by the display means is entered, and in which a flat semi-transparent mirror for reflecting a part of the display light and transmitting a part thereof is arranged parallel to a flat mirror for reflecting the display light onto the flat semi-transparent mirror; and
a curved mirror that projects an image represented by the display light onto the curved surface as the virtual image by reflecting the display light transmitted through the flat semi-transparent mirror onto the curved surface,
wherein the curved mirror has a curved surface shape that when a display light parallel to a first plane, of the display light transmitted through the flat semi-transparent mirror, is reflected by the curved mirror and the curved surface in this order, the reflected display light becomes a display light representing the virtual image parallel to a second plane.

2. The headup display device according to claim 1, wherein
the curved mirror has a curved surface shape that the display light representing the virtual image reflected by the curved surface becomes a display light traveling in substantially the same direction.

3. The headup display device according to claim 1 or 2, wherein
the curved mirror has a convex surface toward the flat semi-transparent mirror.
